Europäisches Patentamt

European Patent Office

Office européen des brevets

(11) Publication number: **0 285 918**
**A2**

## EUROPEAN PATENT APPLICATION

(21) Application number: **88104757.5**

(51) Int. Cl.4: **G01N 25/60**

(22) Date of filing: **24.03.88**

(30) Priority: **06.04.87 US 34719**

(43) Date of publication of application:
**12.10.88 Bulletin 88/41**

(84) Designated Contracting States:
**BE CH DE FR LI NL**

(71) Applicant: **Combustion Engineering, Inc.**
**1000 Prospect Hill Road**
**Windsor, Connecticut 06095(US)**

(72) Inventor: **Hayes, James Kenneth**
**812 Brynwood Drive**
**Chattanooga Tennessee 37415(US)**

(74) Representative: **Gross, Gernot K.**
**Rechtsanwalt**
**Kleiberweg 5**
**D-6200 Wiesbaden(DE)**

(54) **Electrically heated steam quality meter.**

(57) An electrically heated steam quality measurement device (12) which includes a steam inlet (22), a high wall density cartridge heater element (46), an outer tubular housing (36), a pressure sensor (62, 64), temperature sensors (52, 54) flow measurement device (60), steam outlet (68), and a microprocessor based electronics readout device and controller (18). A steam sample of unknown steam quality is extracted from a fossil or nuclear power plant piping system (20)and directed through this device. A globe valve (66) downstream of this unit may be adjusted to ensure that the steam flow through the unit is adequate to ensure that an iso-kinetic steam sample is being acquired. The controller adjusts the power input to the heater to achieve superheated steam at the outlet in the range of 50° to 100°F. The readout device continually monitors the mass flow of superheated steam, inlet and outlet steam temperatures, and power input to the heater. With this information the steam quality is calculated using conventional engineering equations and displayed continuously.The information can also be transmitted to a computer for further calculations and storage.

Fig. lb

# ELECTRICALLY HEATED STEAM QUALITY METER

## Background of the Invention

This invention relates to the measurement of steam quality, and more particularly, to a method and apparatus for measuring the steam quality in the steam line of a process plant.

It is very desirable to have an accurate and reliable "on-line" monitoring system for the measurement of steam quality at various point in a power plant. Some desired locations are the steam generator outlet, the high pressure turbine nozzle outlet, the process steam inlet to the moisture separator reheater and associated tube bundles, and the low pressure turbine exhaust to the condenser. Accurate "on-line" information pertaining to steam quality is very beneficial in assessing the performance of plant components.

Presently, two types of steam quality measuring devices are commercially available. One of these, which has been available for many years, is the throttling calorimeter. This device is described in detail in the ASME Performance Test Codes, such as Part 11, Water and Steam in the Power Cycle, Instruments and Apparatus. The throttling calorimeter operates on the principle that the initial and final enthalpies are equal when steam passes through an orifice from a higher to a lower pressure providing there is not heat loss and the difference between initial and final kinetic energy is negligible. A maximum inaccuracy of +/- 0.2 % is listed for this instrument, but many engineers in the power and process industry feel that this instrument has a much greater inaccuracy than the quoted value.

Another steam quality meter was recently introduced commercially by the Engineering Measurements Company (EMCO). This instrument is referred to as "Q-Bar" and is utilized with the readout device called a "Q-Mate". The technique used in these devices relies on twin hollow tubes, rigidly fixed at each end. Steam, samples from the main steam line, flows continuously through these tubes. The tubes are forced to resonate, in a fashion similar to that of a tuning fork, creating an acceleration force on all matter within the tubes regardless of its nature, i.e., liquid, gas, solid. Consequently, each particle of mass within the tube exerts, in turn, a force which is proportional to the product of its mass and acceleration. As the total mass within the tubes increases, the resonant frequency decreases in accordance with a particular quantitative relationship. By measuring the resonant frequency, the total mass can be computed and the quality can then be computed from the ratio of the mass if the tubes were full of completely saturated steam at the measured temperature, to the total mass.

Presently, this device is represented as capable of measuring steam quality in the rang of 0-100% with a maximum inaccuracy of 1%. The vendor has represented that, with proposed new modifications, the maximum inaccuracy will be improved to about +/-0.2%.

## Summary of the Invention

The electrically heated steam quality meter provides a new technique, differing from the two described above, for determining steam quality. With this technique a controlled amount of heat is inpur into flowing wet steam such as to evaporate the moisture and heat the steam to a prescribed superheat condition. By measuring mass flow, heat input, and superheat temperature the steam quality may be readily calculated and displayed with a readout instrument and controller.

In one embodiment, an iso-kinetic sampling line is deployed in the steam line and is fluidly connected to the inlet of the heater assembly portion of the quality meter. In another embodiment, the inlet end of the heater assembly is located longitudinally on the axis of the steam line, for kinetic sampling of the steam quality.

Preferably, the heater unit or assembly comprises an outer pipe and a cylindrical heater tube concentrically mounted within the pipe, thereby defining a flow annulus therebetween. The cross sectional area of the flow annulus and the length of the heated portion of the inner tube, define a flow volume into which the heat energy is deposited at a controlled rate to be absorbed by a measured mass flow of steam. The heat input will be controlled to achieve superheat in the range of 50°F to 100°F.

When implemented using a microprocessor based computation and readout unit, the present invention provides rapid, continuous on-line monitoring of steam quality, from a plurality of steam locations. The present invention would typically be used to measure steam quality in the range of 92-100%. The components are easily obtained from commercially available sources and it is well within the skill of practitioners in this art to assemble, program, test and use the invention in the field.

## Description of the Drawings

These and other features and advantages of the preferred embodiments of the invention will be described below with reference to the accompanying drawings, in which:

Figures 1a and b, are elevation views partly in section, of the steam quality meter arranged for iso-kinetic sampling in a steam line;

Figure 2 is an enlarged elevation view, in section, of the upper portion of the heater unit of the meter shown in Figure 1;

Figure 3 is a cross-section taken along line 3-3 of Figure 2; and

Figure 4 is an elevation view, partly in section, of an alternative embodiment of the steam quality meter, arranged for kinetic sampling in a steam line.

## Description of the Preferred Embodiments

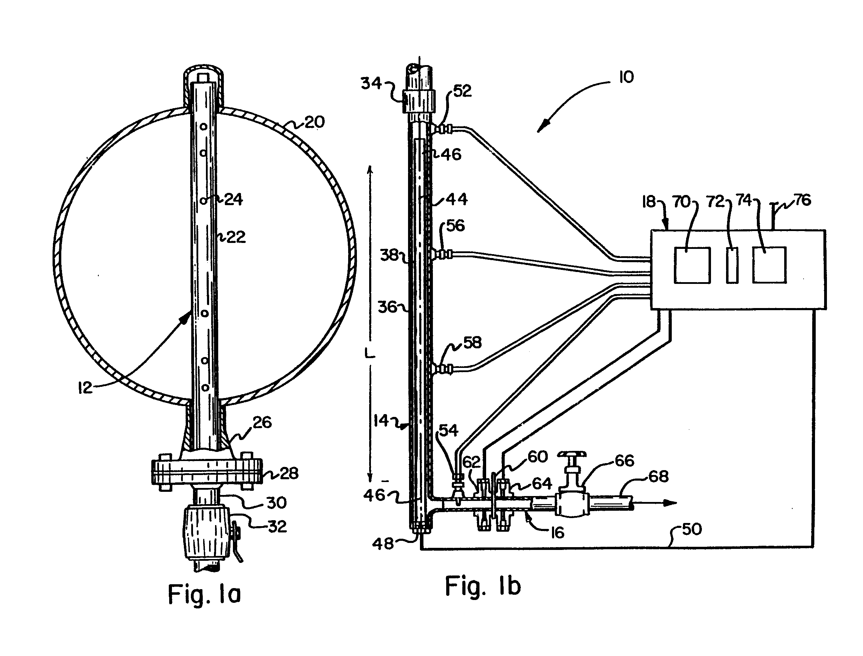

Figure 1 consists of two portions, Figures 1a and 1b, which should be understood as being connected vertically together to illustrate a first embodiment of the invention. The steam quality meter assembly 10 includes a sampling section 12 which is connected to the inlet of a heater unit 14 which in turn is connected to a discharge section 16. A computing and display unit 18 is arranged for collecting data from the heater unit 14 and the discharge section 16. The computing unit may be located near or remotely relative to the heater unit 14, for example in the control room of the steam generating plant. As used herein "display" should be broadly construed to include any form of indication or recordation of measured or computed data.

The upper portion of the sampling section 12 is disposed in a steam line 20. The sampling section includes a sampling tube 22 containing a plurality of holes 24 through which wet steam in line 20 can be drawn iso-kinetically through the sampling section into the heater unit 14. The sampling tube is supported exteriorly of the steam line 20 by a flange 26. A mating flange 28 is secured to flange 26 and supports a connecting pipe 30 which carries a ball valve 32 for selectively connecting or isolating the heater unit 14 from the steam line 20. A reducer 34 fluidly connects tube 30 to the upper end of the heater unit 14.

The heater unit will be described with reference to Figures 1b, 2, and 3, by which the operating details thereof will become evident. Steam is drawn through the sampling section 12 and supplied to the heater unit 14 where the steam is heated along a flow path until it is super heated, preferably by 30-100°F. By measuring the temperature of the super heated steam at the heater unit outlet, as well as the total mass flow rate through the unit, and from a determination of the saturation temperature of the steam at the heater unit inlet, a computation can be made in the computing unit 18 to determine the steam quality in the steam line 20.

The heater may take a variety of external shapes, but the most convenient form includes concentric tubes 36, 38 which define an annular space 40 therebetween. In the illustrated embodiment, the tube 38 is an electrical resistance heater, such as a Watlow heater, having 1.25 inch outer diameter, supported by a plurality of spacers 42 concentrically within the outer tube 36, which is preferably 1.5 inch ID Schedule 80 pipe. The inner tube has a heated portion 44 spanning a predetermined length L, and unheated end portions 46. Thus, the area 40 multiplied by the heated length L defines a specific flow volume which is heated by the heated section 44. The heated section 44 preferably produces heat at a controlled, uniform rate through the surface that defines, or is in contact with, the heated volume.

The heated length L must be long enough to transfer sufficient heat into the steam in the flow volume, to convert saturated steam entering the inlet 46 of the heater unit 14, into super heated steam which enters the discharge section 16. For the Watlow heater in the embodiment mentioned above, which generates 100 Watts per square inch, the required heating length ranges from about 82 inches if the inlet steam quality is 92%, to about 24 inches if the inlet steam quality is about 99%. These figures are based on the assumption of a steam velocity of 200 feet per second through the flow volume and iso-kinetic sampling. For the same Watlow heater 44 but with an outer tube 36 consisting of 2.0 inch inner diameter Schedule 120 pipe, the required heating length would range from about 177 inches to about 52 inches, for a steam quality range of 92 to 99%.

At the lower end of the heater unit 14, a suitable plug 48 connects the heater wire 50 to the inner tube 38, and provides a pressure seal between the inner tube 38 and the outer tube 36.

Thus, selection of the appropriate heating length L, must take into account the lowest steam quality that is likely to be measured, the specific power generated by the heater, and the mass flow (1lbs./hr) in which heat is to be transferred. The flow annulus and the steam velocity will also be important factors in sizing the unit.

The computing unit 18 includes a high precision watt meter (not shown) for measuring the power delivered to the inner tube 38; and thus the heat transferred to the flowing steam. A plurality of thermocouples are also operatively connected to the computing unit 18. Preferably, a first thermocouple 52 is disposed at the inlet end 46 of the heater unit 14 to measure the saturation temperature of the steam drawn for the steam line 20, but this temperature may be inferred or determined by other sensors, for example directly in the steam line 20. A second thermocouple 54 is located downstream of the heater unit 14, preferably in the discharge section 16, for measuring the temperature of the super heated steam. Third and fourth thermocouples 56, 58 may be advantageous located along the length of the heater unit 14 to monitor the temperature distribution within the unit.

The mass flow rate through the heater unit 14 must be determined, preferably in the discharge section by an orifice plate 60 and differential pressure sensors 62, 64 on either side of the orifice plate 60, as is well known in the art. The mass flow rate can be controlled by the globe valve 66 if adjustment is required or for some other reason, the flow rate deviates from the desired rate of, preferably, 200 feet per second in the heater unit. The super heated steam passing through the globe valve 66 is carried through pipe 68 to the condenser, the atmosphere, or other suitable sink or reservoir.

Preferably, the heater unit 14 is insulated to assure that substantially all the heat generated by the heated section 44 is absorbed by the steam in the flow volume, i.e., the annulus 40.

The computing and display unit 18 can be of any conventional hardware type, preferably including a microprocessor programmed to compute the steam quality q in accordance with the following expression:

$$q = [1 - \frac{Q_t - M_t (h_g' - h_g)}{M_t h_{fg}}] \times 100$$

where

$M_t$ is the total mass flow through the heater assembly

$h_g$ is the enthalpy of saturated steam at the determined pressure/temperature

$h_g'$ is the enthalpy of super heated steam at the determined pressure and measured super heat temperature

$Q_t$ is the energy generated in heater section

$h_{fg}$ is the heat required to convert saturated liquid to saturated steam

This is derived from:

(1) $M_t = (M_w + M_s)$ $\frac{lbs.}{hr.}$ (Mass Flow)

(2) $Q_t = Q_1 + Q_2$ $\frac{BTU}{hr.}$ (Heater Input)

(3) $Q_1 = M_w H_{fg}$ (Heat Input to Evaporate Moisture)

(4) $Q_2 = M_t (h'_g - h_g)$ (Heat Input To Superheat total Steam Sample Flow) and then substituting (3) and (4) into (2).

It is within the ordinary skill of practitioners of this art, having the benefit of the teachings of the present disclosure, to arrange the thermocouples. differential pressure cells, the Watlow heater, and a programmed microprocessor, to gather the data and compute the expression as set forth above.

The computing unit 18 preferably includes a display having several windows to indicate, for example, steam quality 70, temperature of the super heated steam 72, and power delivered to the inner tube 74. In the illustrated embodiment the computing unit also includes an interface output line 76 for delivering a 4-20 millilamp output signal or providing an RS323 data path. A plurality of meters 10 and associated computing units 18 can deliver data to a central control room or the like, where plant operating conditions and steam quality can be determined.

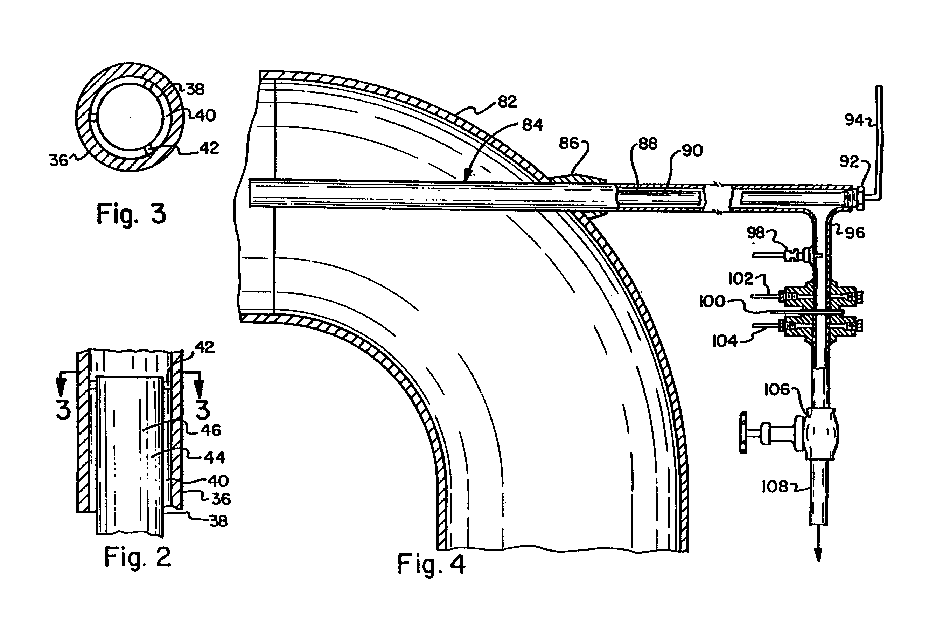

Figure 4 shows an alternative embodiment for kinetic sampling in steam line 82. The steam quality meter 84 penetrates the steam line and is supported therein by a nozzle 86 through which the outer tube 88 and inner tube 90 pass. Preferably the nozzle 86 is located on the exterior elbow portion of the steam line 82 so that a straight line extension of the tubes 88, 90 of the meter 84 lies on an extension of a straight line portion of the steam line axis.

The inlet portion of the meter 84 is substantially as shown in Figures 2 and 3. There is no sampling section per se, since the measurement will be made kinetically and there is no need to "settle" the steam before it enters the heating unit. In all other respects, the meter 84 is substantially the same as that described with respect to Figure 1. A plug 92 seals the annulus between the outer and inner tubes and a heater line 94 passes through the plug 92 for connection with the heater element in the inner tube 90. The discharge section 96 includes a thermocouple 98 for measuring the super heated steam temperature, and the orifice plate 100 and differential transducers 102, 104. The flow rate of the super heated steam is controllable through flow valve 106, and the steam exits the meter assembly through pipe 108.

With respect for both embodiments, it should be appreciated that arrangements other than those describe above may be used to heat the steam within the annulus 40. For example, the heat may be supplied through the external tube 36 or 88, if a suitably configured heater element is available. Also, both tubes could provide a source of heat. The important design variables relating to the inner and outer tubes 36, 38, the heater section 44 and heated length L, and the saturated and super heated steam, are derivable based on the following quantitative example:

EXAMPLE

1. Required -Size steam quality meter electric heater based on the following conditions: P - 200 psia
V - 200 Ft.Sec.
W - Assume watt density of 100 watts/in$^2$.
$D_1$ -Use 1 1/4" diameter firerod heater
$D_2$ -Assume inside diameter of unit to be 1/4" and 1/2" larger in diameter.

2. Equations

(a) Steam Quality

$$X = \frac{W_s}{W_s + W_w} \quad \text{or} \quad W_w = \frac{W_s}{X} - W_s = W_s \left(1 - \frac{1}{X}\right)$$

Where:
  $W_s$ = lbs./hr. of steam flow
  $W_w$ = lbs./hr. of water flow
  $X$ = steam quality -%

(b) Steam and Water Volumetric Flow Rate

$$Q = \frac{W_s}{\rho_s} + \frac{W_w}{\rho_w} \quad \frac{ft^3}{hr.}$$

Where:
  $W_s$ = lbs./hr. of steam flow
  $W_w$ = lbs./hr. of water flow
  $Q$ = steam and water flow ft$^3$/hr. $\frac{(W_s}{\rho_s} + \frac{W_w)}{\rho_w}$
  $\rho_s$ = density of steam @ 200 psia (sat.)
  $\rho_w$ = density of water @ 200 psia (sat.)

5

(c) Volumetric Flow as a function of Mass Flow and Quality Substitute

$$Q = \frac{W_s}{\rho_s} + \frac{W_s (1 - \frac{1}{X})}{\rho_w} = W_s [\frac{1}{\rho_s} + \frac{(1 - \frac{1}{X})}{\rho_w}]$$

(d) Thermal Energy Required to Convert Saturated Water to Saturated Steam $E_1 = W_w \times \Delta h \frac{BTU}{lb.}$

(e) Thermal Energy Required to Superheat Steam (30°) $E_2 = (W_s + W_w) \times \Delta h' \frac{BTU}{hr.}$

(f) Heat Rating Required

$$K = \frac{E_1 + E_2}{3413 \ BTU/KW \ hr.} \ BTU/hr. \quad KWH$$

(g) Surface Area of Heater Required $A_{Heater} = \frac{K}{100} \ In.^2$

(h) Length of Heating Element Required

$$L = \frac{A_H}{\pi D_1}$$

Constants (From ASME Steam Tables)

(1) $\rho_W = 54.377 \ lb./ft.^3 \ @ \ 200 \ psi$

$\rho_S = .4377 \ lbs./ft^3$

(2) $\Delta h = (h_g - h_f) \quad h_g = 1198.3$

$\Delta h = 842.8 \quad h_f = 355.9$

(3) $\Delta h' = h_g' - h_g \ BTU/lb._m$

Where:
$\Delta h'$ = Heat Required to Superheat Sat. Steam
$h_g'$ = 1222.6 at 420° F (Superheat 30°)
$h_g$ = 1203.7 at 390° F (Saturated)
$\Delta h$ = 18.9
$D_1$ = 1.25 In.
$D_2$ = 1.5 In.
Area = 0.00375 ft.$^2$
$Q$ = .75 ft.$^3$/Sec.
$h$ = 842.8 BTU/lb. $h'$ = 18.9 BTU/lb.

| $X$ (%) | $W_s$ (lb./hr.) | $W_w$ (lb./hr) | $K$ (k watt) | $A_{Heater}$ (in.²) | $L_{Heater}$ (in.) |
|---|---|---|---|---|---|
| 92 | 1182.6 | 102.8 | 32.5 | 325.0 | 82.76 |
| 93 | 1182.5 | 89.0 | 28.5 | 285.3 | 72.65 |
| 94 | 1182.4 | 75.5 | 25.2 | 251.8 | 64.13 |
| 95 | 1182.3 | 62.2 | 21.9 | 219.1 | 55.79 |
| 96 | 1182.2 | 49.3 | 18.7 | 187.2 | 47.67 |
| 97 | 1182.1 | 36.6 | 15.6 | 155.8 | 39.67 |
| 98 | 1182.0 | 24.1 | 12.5 | 125.0 | 31.83 |
| 99 | 1181.9 | 11.9 | 9.5 | 94.8 | 24.14 |

$$D_1 = 1.25 \text{ In.} \qquad Q = 1.636 \text{ ft.}^3/\text{sec.}$$

$$D_2 = 1.75 \text{ In.} \qquad H = 842.8 \text{ BTU/lb.}$$

$$\text{Area} = 0.00818 \text{ ft.}^2 \qquad H' = 18.9 \text{ BTU/lb.}$$

| $X$ (%) | $W_s$ (lb./hr.) | $W_w$ (lb./hr) | $K$ (k watt) | $A_{Heater}$ (in.²) | $L_{Heater}$ (in.) |
|---|---|---|---|---|---|
| 92 | 2579.7 | 224.3 | 69.7 | 696.8 | 177.44 |
| 93 | 2579.4 | 194.2 | 62.2 | 622.1 | 158.42 |
| 94 | 2579.2 | 164.6 | 54.9 | 548.9 | 139.78 |
| 95 | 2579.0 | 135.7 | 47.8 | 477.9 | 121.70 |
| 96 | 2578.7 | 107.5 | 40.8 | 408.3 | 103.97 |
| 97 | 2578.5 | 79.8 | 34.0 | 339.9 | 86.56 |
| 98 | 2578.3 | 52.6 | 27.3 | 272.7 | 69.44 |
| 99 | 2578.1 | 26.0 | 20.7 | 206.9 | 52.69 |

The relationships may be used to modify the details of the arrangement shown and described herein. In general, the meter in accordance with the present invention would have a heated length in the range between about two to fifteen feet. The cross-sectional area of the flow volume would typically fall in the range between about 0.002 and 0.010 square feet. The precise configuration of the meter for a given situation depends upon the range of steam quality to be measured and the specific power of achievable in the heating unit.

## Claims

1. A steam quality meter comprising:
   a sample line for drawing wet steam iso-kinetically from a source;
   a heating unit fluidly connected to the sample line, the heating unit including a predetermined steam flow volume and means for super heating the steam in the flow volume;
   means for measuring the total steam mass flow through the unit;
   means for determining the steam temperature at the inlet to the unit;
   means for measuring the temperature of the super heated steam at the outlet of the unit; and
   means for computing and displaying the quality of the steam in the source, as a function of the steam saturation temperature, the steam super heated temperature, the total mass flow rate, and the power generated by the heating unit.

2. The steam quality meter of claim wherein the heating unit comprises concentric tubes and wherein the flow volume is defined by a flow area between the tubes over a predetermined length of at least one tube.

3. The steam quality meter of claim 2 wherein the tubes are cylindrical and the area is the annulus between the tubes.

4. The steam quality meter of claim 2 wherein one of the tubes comprises a heater which transmits heat into the flow volume at a substantially uniform rate over said predetermined length.

5. The steam quality meter of claim 4 wherein the tube comprising the heater is the inner one of the concentric tubes.

6. The steam quality meter of claim 3 wherein the flow area is in the range of about 0.002 to 0.010 square feet and the predetermined length is in the range of about two to fifteen feet.

7. The steam quality meter of claim 1 further including a ball valve between the sample line and the heater unit.

8. The steam quality meter of claim 1 further including means for controlling the mass flow rate through the heating unit.

9. The steam quality meter of claim 8 wherein the means for controlling the mass flow rate is a globe valve.

10. The steam quality meter of claim 1 wherein the means for computing and displaying includes means for displaying values characterizing the temperatures of the wet steam and the super heated steam, and the mass flow rate.

11. A steam quality meter comprising:

a heater assembly including an open-ended inlet section for receiving a flow of steam, a heater section having a steam flow volume, and an outlet section;

means for determining the enthalpy of the steam flowing through the inlet section;

means for generating power in the heater section, to super heat all the steam flowing through the steam flow volume before the steam enters the outlet section;

means for determining the enthalpy of the steam in the outlet section;

means for determining the total steam mass flow rate through the heater assembly;

means for determining the power generated by said means for generating power; and

means for computing and displaying the steam quality from the determined steam enthalpies, power, and mass flow rate.

12. The steam quality meter of claim 11, wherein the heater assembly is in the form of concentric tubes.

13. The steam quality meter of claim 12 further including means for mounting the heater assembly externally to a steam line.

14. The steam quality meter of claim 13 where said means for mounting include a sample line for positioning inside said steam line to iso-kinetically draw steam into said inlet section, said inlet section being positioned outside said steam line.

15. The steam quality meter of claim 13 wherein said means for mounting include a nozzle located on the exterior elbow of the steam line, and supporting at least said inlet section within the steam line to kinetically draw steam into the heater assembly.

16. The steam quality meter of claim 15, wherein the inlet section is in longitudinal registry with the axis of the steam line.

17. A method for measuring steam quality, comprising:

providing a heater assembly including an inlet section, a heater section having a flow volume, and an outlet section;

establishing a flow of steam through the heater assembly;

determining the saturation temperature of the steam as it flows through the inlet section;

generating sufficient energy in the heater section flow volume to super heat all the steam;

measuring the temperature of the super heated steam in the outlet section;

determining the pressure in the heater assembly, and

computing the steam quality as a function of the energy input to the flow volume, the total steam mass flow, and the steam temperature in the inlet and outlet sections.

18. The method of claim 17 wherein the step of computing includes the step of calculating the steam quality q from the expression,

$$q = [1 - \frac{Q_t - M_t (h_g' - h_g)}{M_t h_{fg}} \times 100$$

where $M_t$ is the total mass flow through the heater assembly

$H_g$ is the enthalpy of saturated steam at the determined pressure/temperature

$h_g'$ is the enthalpy of super heated steam at the determined pressure and measured super heat temperature

$Q_t$ is the energy generated in heater section

$h_{fg}$ is the heat required to convert saturated liquid to saturated steam

19. The method of claim 18 wherein the step of generating energy includes the step of passing a controlled electric current through a resistance element in the heater section.

Fig. 1a

Fig. 1b

Fig. 3

Fig. 2

Fig. 4

0 285 918